# EUROPEAN PATENT APPLICATION

(11) **EP 3 734 575 A1**
(43) Date of publication of application: **04.11.2020**
(21) Application number: 20169238.1
(22) Date of filing: 13.04.2020
(51) Int. Cl.: G08G 5/00, H04L 29/08

(54) **SYSTEM AND METHOD FOR RENDERING DYNAMIC DATA AND CONTROLLING THE VISUAL FORM OF THE DATA ON A COCKPIT DISPLAY WITHOUT ALTERING THE CERTIFIED SOFTWARE**

(30) Priority: 30.04.2019 IN 201941017270; 25.02.2020 US 202016800470
(71) Applicant: Honeywell International Inc., Morris Plains, NJ 07950 (US)
(72) Inventor: B, Jayasenthilnathan, Morris Plains, NJ New Jersey 07950 (US); GURUSAMY, Saravanakumar, Morris Plains, NJ New Jersey 07950 (US); MELDRUM, Richard Mitchel, Morris Plains, NJ New Jersey 07950 (US); BALL, Jerry, Morris Plains, NJ New Jersey 07950 (US)
(74) Representative: LKGlobal UK Ltd.

(57) **Abstract**

A graphic rendering system for use with certified avionics software onboard an aircraft is disclosed. The graphic rendering system includes a graphic rendering engine that has been certified by governing governmental authority for use in an aircraft for displaying critical information, wherein the graphic rendering engine is configured to access an aircraft-specific graphical database file and an aircraft-specific geographical database file for graphical and geographical data for use in rendering the graphic for display on the cockpit display. Both the aircraft-specific graphical database file and the aircraft-specific geographical database file have been customized for use on the aircraft. The graphic rendering engine is configured to use the aircraft-specific graphical database file and the aircraft-specific geographical database file for rendering the graphic for displaying critical information on the cockpit display without prior certification by governing governmental authority of either the aircraft-specific graphical database file or the aircraft-specific geographical database file.

## Description

### TECHNICAL FIELD

The present disclosure generally relates to graphical display systems in aircraft, and more particularly relates to field-configurable graphical display systems.

### BACKGROUND

In a typical cockpit display that shows various geographical layers, the physical attributes are provided by a database (DB) and the graphical attributes are configured in the software. For example, a map display that shows various airports in the USA, the physical attributes (*e.g*., Name, IDENT, latitude, longitude, etc.) are provided by the navigation database and the graphical attributes (*e.g*., color, font, size, icon, etc.) are hardcoded in the software. When a customer requests a new DB-based layer, there is a long lead time to delivery as the software must be modified, tested and certified.

One or more of the following problems may be observed when a new DB-based layer is added: First, adding additional feature on a map display requires software recertification. Second, there can be a long lead time for delivery - typically takes 6-12 months to add a layer. Third, after software is certified and delivered, issues observed in the field cannot be fixed without recertification. For example, a simple color change cannot be performed because it would result in the software being modified and a need for the software to be recertified. Hence more time is spent before delivery to thoroughly test many aspects of the software. Fourth, uman factors (HF) concerns must be addressed before delivery as no HF related change can be made after delivery/certification. Fifth, most of the 'configurable' items of a map layer are frozen for an aircraft type and are not configurable/tailorable for individual pilots/airlines because tailoring would require recertification.

Hence, it is desirable to provide a system that can allow for a new DB-based layer to be added without software recertification. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, disclosed is a graphic rendering system for use with certified avionics software onboard an aircraft to generate and render a graphical display for display on a cockpit display on the aircraft. The graphic rendering system includes a graphic rendering engine implemented by avionics computing equipment on the aircraft and that has been certified by governing governmental authority for use in an aircraft for displaying critical information, wherein the graphic rendering engine is configured for use with certified avionics display software to render a graphic for display on a cockpit display, and configured to access an aircraft-specific graphical database file and an aircraft-specific geographical database file for graphical and geographical data for use in rendering the graphic for display on the cockpit display. The aircraft-specific graphical database file contains graphical information including symbol, fill color, text color, line thickness, highlight, outline color and/or shape data that has been customized for use on the aircraft. The aircraft-specific geographical database file contains geographical information including latitude, longitude, bearing, point, line, and/or polygon data that has been customized for use on the aircraft. The graphic rendering engine is configured to use the aircraft-specific graphical database file and the aircraft-specific geographical database file for rendering the graphic for displaying critical information on the cockpit display without prior certification by governing governmental authority of either the aircraft-specific graphical database file or the aircraft-specific geographical database file.

In another embodiment, a method of displaying critical avionics information on a specific aircraft is disclosed. The method includes: invoking, using avionics computing equipment on the specific aircraft, a graphic rendering engine that has been certified by governing governmental authority for use in an aircraft for displaying critical information; accessing, using the graphic rendering engine, an aircraft-specific graphical database file and an aircraft-specific geographical database file, wherein the aircraft-specific graphical database file contains graphical information including symbol, fill color, text color, line thickness, highlight, outline color and/or shape data that has been customized for use on the specific aircraft, and wherein the aircraft-specific geographical database file contains geographical information including latitude, longitude, bearing, point, line, and/or polygon data that has been customized for use on the specific aircraft; and using, by the graphic rendering engine, the aircraft-specific graphical database file and the aircraft-specific geographical database file to render a graphic for displaying critical information on the cockpit display without prior certification by governing governmental authority of either the aircraft-specific graphical database file or the aircraft-specific geographical database file.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Aspects of the present disclosure are best understood from the following detailed description when read with the accompanying figures, wherein like numerals denote like elements, and wherein:
FIG. 1A is a block diagram depicting example systems on an airborne vehicle or aircraft (such as an airplane, helicopter, etc.) for displaying graphics to a flight crew, in accordance with some embodiments;
FIG. 1B is a block diagram illustrating example Geographical and Graphical Data Content, in accordance with some embodiments;
FIG. 2 is a block diagram depicting example systems on an aircraft for displaying graphics to a flight crew, in accordance with some embodiments;
FIG. 3 is a block diagram depicting example systems on an aircraft for displaying graphics to a flight crew, in accordance with some embodiments;
FIG. 4 is a block diagram depicting example systems on an aircraft for displaying graphics to a flight crew, in accordance with some embodiments;
FIG. 5 is a block diagram depicting a framework for a graphic rendering engine as a A661 User Application, in accordance with some embodiments;
FIG. 6 is a block diagram depicting example systems on an aircraft for displaying graphics to a flight crew, in accordance with some embodiments; and
FIG. 7 is a process flow chart depicting an example process 700 for displaying critical avionics information on an aircraft, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques and articles to decouple certified software from database layer additions or updates. The apparatus, systems, techniques and articles provided herein involves creating a rendering engine/framework as a one-time update in the display software. A fixed set of database schemas can be developed - each schema catering to a type of layer; e.g. point database schema, line/vector database schema, polygon database schema, etc. The rendering engine can parse and display any number of database driven layers if they match the given database schema.

In addition to the geographical data points that are stored in fixed database schemas, the apparatus, systems, techniques and articles provided herein provide a separate graphical database will be created that abstracts the graphical data points; *e.g.,* color, font size, symbol type, range cutoffs, menu labels, etc. Thus, both geographical and graphical data points can be decoupled from the software and stored in separate databases. These geographical and graphical databases are considered Parametric Data Item (PDI) files as defined in DO-178C, which can allow an end user to perform the following without changing and re-certifying the software: Add a database graphical layer at any point of time; Change the display characteristics (color, size, symbol, etc.) any time; Customize the look and feel of the display for each aircraft/vehicle; Add separate graphical layers for different aircraft/vehicle/fleet; Allow human factor evaluation to be performed even when the vehicle is in service; and/or Provide multi-lingual support by creating databases with different fonts/languages.

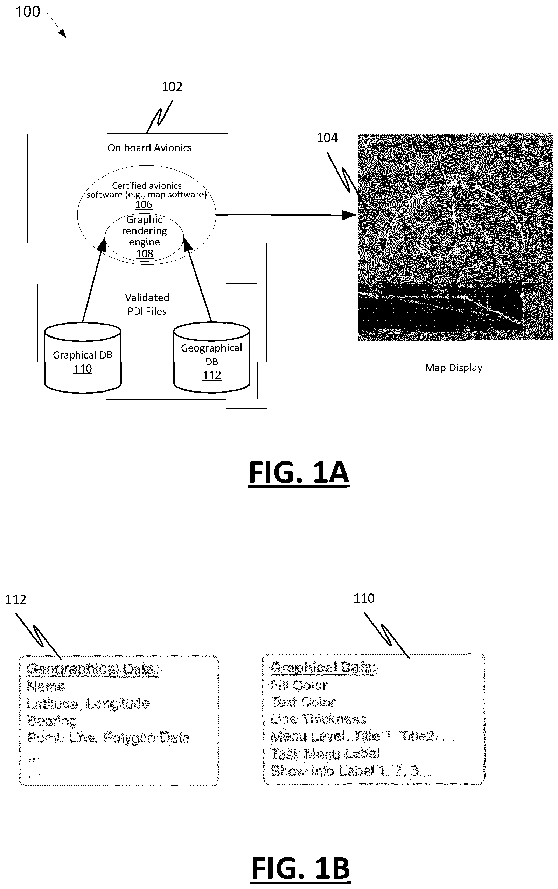

FIG. 1A is a block diagram depicting example systems 100 on an airborne vehicle or aircraft (such as an airplane, helicopter, etc.) for displaying graphics to a flight crew. The example systems 100 include an on board avionic system 102 that is configured to generate a graphic display 104 for display on a display device. The on board avionic system 102 includes a controller comprising one or more processors and computer readable storage media. In this example, the controller in the on board avionics system 102 executes certified avionics software 106 *(e.g.,* map software) to generate the graphic display 104.

To generate the graphic display 104, the certified avionics software 106 invokes a graphic rendering system that executes on the on board avionics system 102 and decouples the certified avionics software 106 from database layer additions or updates to allow for aircraft-specific customization of displays. The example graphic rendering system includes a graphic rendering engine 108 that is certified for flight and two database (DB) files, a graphical DB file 110 and a geographical DB file 112, that do not have to be certified for flight.

In operation, the certified avionics software 106 (*e.g.,* map software 106) can generate a graphic display 104 (*e.g.,* map display 104) for display in a cockpit. The map software 106 invokes the graphic rendering engine 108 to render graphics for the map display 104. The graphic rendering engine 108 accesses the graphical DB file 110 and geographical DB file 112 for customized content for use in rendering graphics. The graphical DB file 110 and geographical DB file 112 are configured based upon a predetermined/agreed upon format and may be validated by different organizations such as a human factors group or systems engineering group at an organization and not go through a time intensive and costly certification process. The graphical DB file 110 and geographical DB file 112 do not have to undergo rigorous certification as would be done with certified cockpit software. Thus, changes can be more easily made to the graphical DB file 110 and geographical DB file 112 to customize the graphical layers that can be produced from them for different aircraft and/or missions. The graphic rendering engine 108 reads the DB files 110, 112 and uses content from them to render the display 104.

Thus, certified avionics software 106 can invoke the graphic rendering system to generate and render a graphical display for display on a cockpit display on an aircraft, wherein the graphic rendering system comprises a graphic rendering engine 108 implemented by avionics computing equipment 102 on the aircraft and that has been certified by governing governmental authority for use in an aircraft for displaying critical information. The graphic rendering engine 108 is configured for use with certified avionics display software to render a graphic for display on a cockpit display and is configured to access an aircraft-specific graphical database file and an aircraft-specific geographical database file for graphical and geographical data for use in rendering the graphic for display on the cockpit display. The graphic rendering engine 108 is configured to use the aircraft-specific graphical database file 106 and the aircraft-specific geographical database file 108 for rendering the graphic for displaying critical information on the cockpit display without prior certification by governing governmental authority of either the aircraft-specific graphical database file or the aircraft-specific geographical database file.

FIG. 1B is a diagram illustrating the type of information that may be contained in an aircraft-specific graphical DB file 110 and an aircraft-specific geographical DB file 112. The aircraft-specific graphical database file 110 may contain information regarding how information should be rendered such as symbol, fill color, text color, line thickness, Menu level, task menu label, and other graphical aspects such as highlight and outline color or shade. The aircraft-specific graphical database file 110 may have been customized for use on the aircraft based on aircraft profile data. The geographical DB file 112 may contain geographical information such as latitude, longitude, bearing, point, line, polygon data, and more. The geographical DB file 112 also may have been customized for use on the aircraft based on the aircraft profile data.

The example illustrated in FIGS. 1A and 1B supports fundamental geometric shapes such as point, line and polygon. The graphic rendering system can be expanded to: (1) support additional types and widgets; (2) allow for runtime database creation, for example, with a pay-as-you-go model; (3) allow for runtime database updates and fleet management; (4) allow for the embedding of the graphic rendering engine in a A661 User Application (UA); and (6) allow for extending the schema to other offline applications (e.g. FMS, TCAS) to dynamically add functions without certification.

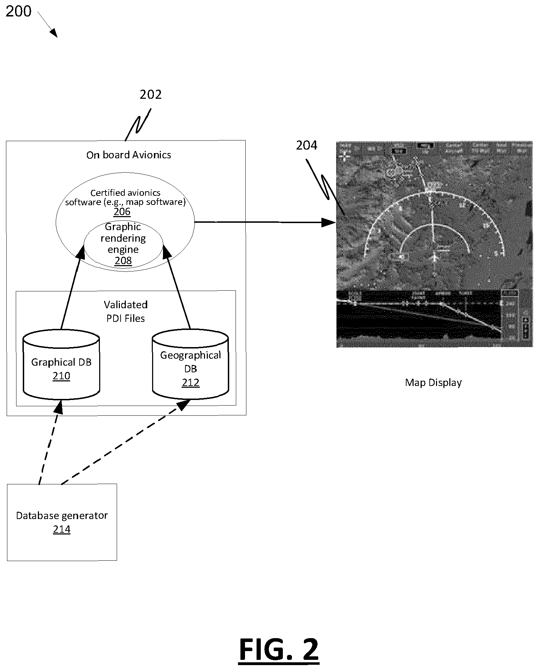

FIG. 2 is a block diagram depicting example systems 200 on an aircraft for displaying graphics to a flight crew. The example systems 200 include an on board avionic system 202 that is configured to generate a graphic display 204 for display on a display device. The on board avionic system 202 includes a controller comprising one or more processors and computer readable storage media. In this example, the controller in the on board avionics system 202 executes certified avionics software 206 *(e.g.,* map software) to generate the graphic display 204.

To generate the graphic display 204, the certified avionics software 206 invokes a graphic rendering system that executes on the on board avionics system 202 and decouples the certified avionics software 206 from database layer additions or updates to allow for aircraft-specific customization of displays. The example graphic rendering system includes a graphic rendering engine 208 that is certified for flight and two database (DB) files, a graphical DB file 210 and a geographical DB file 212, that do not have to be certified for flight.

In operation, the certified avionics software 206 (*e.g.,* map software 206) can generate a graphic display 204 (*e.g.,* map display 204) for display in a cockpit. The map software 206 invokes the graphic rendering engine 208 to render graphics for the map display 204. The graphic rendering engine 208 accesses the graphical DB file 210 and geographical DB file 212 for customized content for use in rendering graphics. The graphical DB file 210 and geographical DB file 212 are configured based upon a predetermined/agreed upon format and may be validated by different organizations such as a human factors group or systems engineering group at an organization and not go through a time intensive and costly certification process. The graphical DB file 210 and geographical DB file 212 do not have to undergo rigorous certification as would be done with certified cockpit software. Thus, changes can be more easily made to the graphical DB file 210 and geographical DB file 212 to customize the graphical layers that can be produced from them for different aircraft and/or missions. The graphic rendering engine 208 reads the DB files 210, 212 and uses content from them to render the display 204.

The graphics rendering system also includes a database generator 214 that allows an end user to customize the display layout 204 with various widgets. The database generator 214 can update a graphical DB file 210 and/or a geographical DB file 212 with a customized graphic layer to allow a display layout 204 to be customized.

The graphic rendering engine 202 does not need to be updated to support the schema of various widgets. The database generator 214 is configured to add content to both the graphical DB file 210 and the geographical DB file 212. In addition to the basic geometric shapes (point, line, polygon), the database generator 214 could cause a compound graphic type to be added. This graphic type may contain graphic and raw data for multiple graphic types of Line, Points or Polygons.

For example, an air route traffic control center (ARTCC) Grid is a compound graphic type with lines and points. The lines indicate the boundaries of each grid and the points indicate the location of the control towers. The database generator 214 can create two databases that can be added to the geographical DB file 212. The database generator 214 can create an ArtccGrid.bin that holds data of the boundary lines and an ArtccTowers.bin that holds data of the control towers. These can be added to the geographical DB file 212. Other complex examples include Airport Moving Maps that consists of points, lines and polygons that can be embedded as a compound type and rendered as one item.

In the example of FIG. 2, the database generator 214 was on board the aircraft executing on on-board avionics systems. In other examples, the database generator 214 may reside off-board the aircraft.

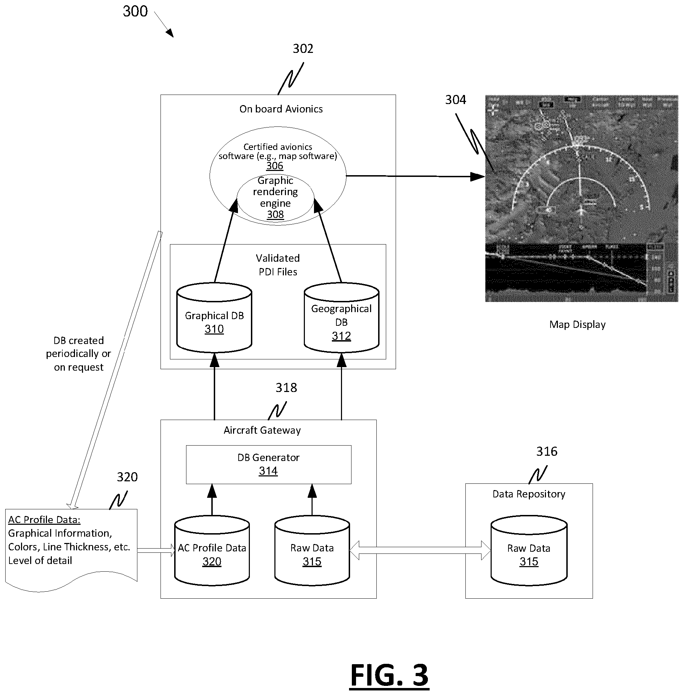

FIG. 3 is a block diagram depicting example systems 300 for displaying graphics to a flight crew. The example systems 300 include an on board avionic system 302 that is configured to generate a graphic display 304 for display on a display device. The on board avionic system 302 includes a controller comprising one or more processors and computer readable storage media. In this example, the controller in the on board avionics system 302 executes certified avionics software 306 (*e.g.,* map software) to generate the graphic display 304.

To generate the graphic display 304, the certified avionics software 306 invokes a graphic rendering system that decouples the certified avionics software 306 from database layer additions or updates to allow for aircraft-specific customization of displays. The example graphic rendering system includes a graphic rendering engine 308 that is certified for flight and two database (DB) files, a graphical DB file 310 and a geographical DB file 312, that do not have to be certified for flight. The example graphic rendering system also includes a database generator 314 that allows an end user to customize the display layout 304 with various widgets. The database generator 314 can generate and/or update a graphical DB file 310 and/or a geographical DB file 312 with a customized graphic layer to allow a display layout 304 to be customized.

In the illustrated example, raw data 315 from a data repository 316 (*e.g.,* ground based server) can be provided to an aircraft gateway 318. The aircraft gateway 318 could also receive aircraft profile data 320 from an avionics system on board the aircraft, stored at the aircraft gateway 318, or from some other source. The aircraft profile data 320 may include graphical information such as colors, line thickness, etc. The aircraft gateway 318 includes the database generator 314 that is configured to dynamically create a new (or update an existing) graphical DB file 310 and geographical DB file 312 from a copy of the raw information 315 and aircraft profile data 320. The aircraft gateway 318 is configured to upload the new or updated graphical DB file 310 and geographical DB file 312 to the onboard avionics equipment 302. This could enable the provision of databases on the fly - for example, a specific database for a flight leg - allowing a 'Software as A Service' or 'Pay as you go' model. The onboard avionics 302 may request that new database files 310, 312 be created periodically or on request, and the aircraft gateway 318 can provide the new database files 310, 312 in response.

Thus, the database generator 314 may be configured to retrieve aircraft profile data 320 that is specific to an aircraft and generate, based on the aircraft profile data 320, an aircraft-specific graphical database file 310 and/or an aircraft-specific geographical database file 312 for use with the graphic rendering engine 308 and the certified avionics display software 306 in rendering the graphic 304 for display on the cockpit display.

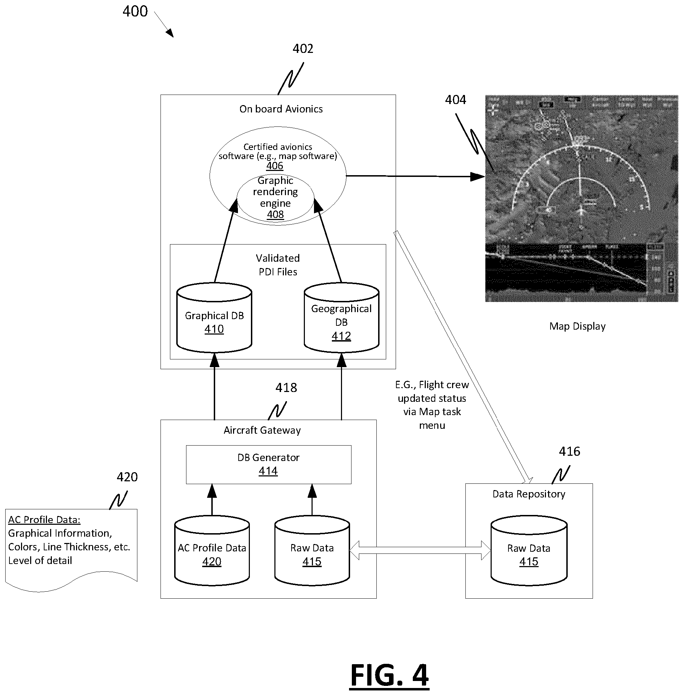

FIG. 4 is a block diagram depicting example systems 400 for displaying graphics to a flight crew. The example systems 400 include an on board avionic system 402 that is configured to generate a graphic display 404 for display on a display device. The on board avionic system 402 includes a controller comprising one or more processors and computer readable storage media. In this example, the controller in the on board avionics system 402 executes certified avionics software 406 (*e.g.,* map software) to generate the graphic display 404.

To generate the graphic display 404, the certified avionics software 406 invokes a graphic rendering system that decouples the certified avionics software 406 from database layer additions or updates to allow for aircraft-specific customization of displays. The example graphic rendering system includes a graphic rendering engine 408 that is certified for flight and two database (DB) files, a graphical DB file 410 and a geographical DB file 412, that do not have to be certified for flight. The example graphic rendering system also includes a database generator 414 that allows an end user to customize the display layout 404 with various widgets. The database generator 414 can update a graphical DB file 410 and/or a geographical DB file 412 with a customized graphic layer to allow a display layout 404 to be customized.

In the illustrated example, raw data 415 from a data repository 416 *(e.g.,* ground based server) can be provided to an aircraft gateway 418. The aircraft gateway 418 could also receive aircraft profile data 420 from an avionics system on board the aircraft, stored at the aircraft gateway 418, or from some other source. The aircraft profile data 420 may include graphical information such as colors, line thickness, etc. The aircraft gateway 418 includes the database generator 414 that is configured to dynamically create a new (or update an existing) graphical DB file 410 and geographical DB file 412 from a copy of the raw information 415 and aircraft profile data 420. The aircraft gateway 418 is configured to upload the new or updated graphical DB file 410 and geographical DB file 412 to the onboard avionics equipment 402.

The graphic rendering system in this example allows for a runtime database update. Without a system that decouples certified avionics software from database layer additions or updates, database 'updating' is not possible. Any data point that would need to be changed would need the change to occur at the source or before creating the database. Consider the given use case: Shell has deployed three Agusta helicopters to visit ten oil rigs for inspection. At the beginning of a mission, the ten oil rigs in each helicopter would need to be displayed in an 'Amber' color - Amber indicates that an inspection of the oil rig is incomplete. As each helicopter visits and inspects an oil rig, the color for the inspected oil rig should change in each aircraft to either 'Red' (Failed Inspection) or 'Green' (Passed Inspection).

This scenario may be implemented with the use of the graphic rendering engine 408. The database generator 414 can dynamically update the graphical DB file 410 to implement this scenario. As each helicopter crew finishes an oil rig inspection, the flight crew can provide an inspection pass/fail indication, which can in turn be sent to the data repository 416 via datalink, which in turn updates the raw data 415. As the raw data 415 is synced with the Aircraft gateway 418, the database is dynamically updated and can show the updated status on all Agusta displays.

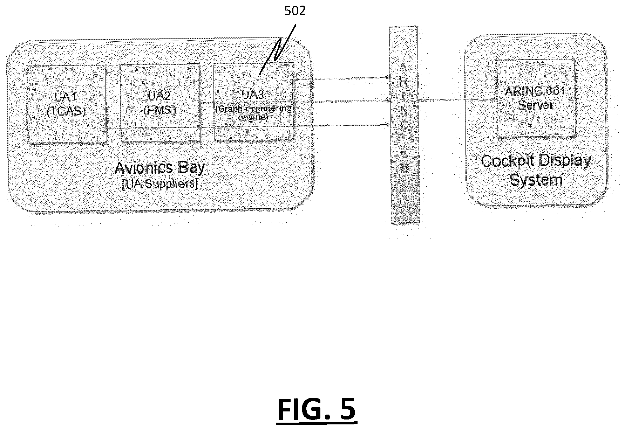

FIG. 5 is a block diagram depicting a framework for a graphic rendering engine as an ARINC 661 User Application (UA). A database parsing and rendering engine 502 can be embedded inside an ARINC 661 User Application. This UA 502 can continue to parse a non-certified database (*e.g.*, non-certified graphical DB file and/or non-certified geographical DB file) and create graphical outputs in the ARINC 661 formats. This allows multiple database layers to be added (to the non-certified graphical DB file and/or non-certified geographical DB file) without recertifying on an ARINC 661 based platform.

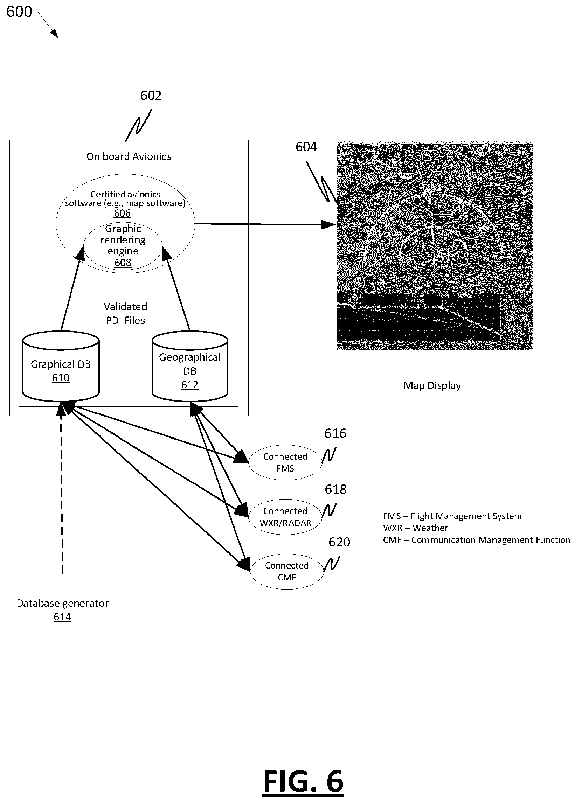

FIG. 6 is a block diagram depicting example systems 600 for displaying graphics to a flight crew. The example systems 600 include an on board avionic system 602 that is configured to generate a graphic display 604 for display on a display device. The on board avionic system 602 includes a controller comprising one or more processors and computer readable storage media. In this example, the controller in the on board avionics system 602 executes certified avionics software 606 (*e.g.,* map software) to generate the graphic display 604.

To generate the graphic display 604, the certified avionics software 606 invokes a graphic rendering system that decouples the certified avionics software 606 from database layer additions or updates to allow for aircraft-specific customization of displays. The example graphic rendering system includes a graphic rendering engine 608 that is certified for flight and two database (DB) files, a graphical DB file 610 and a geographical DB file 612, that do not have to be certified for flight. The example graphic rendering system also includes a database generator 614 that allows an end user to customize the display layout 604 with various widgets. The database generator 614 can update a graphical DB file 610 and/or a geographical DB file 612 with a customized graphic layer to allow a display layout 604 to be customized.

In this example, the graphic rendering engine 608 is configured to function with connected applications. As connectivity solutions keep improving, more and more avionics applications may be hosted offline *(e.g.,* cloud based). For example, an FMS Performance module 616 may be hosted offline as there may be no need for constant/continuous computation of performance metrics. When the flight crew requests a fresh set of performance metrics, the request and corresponding data can be sent over datalink to an offline *(e.g.,* cloud based) FMS Performance module 616 that computes the result and sends it back to the aircraft. Similarly, other applications, such as a weather/ radar module 618 and communication management function module 620 may be hosted offline (*e.g.,* cloud based). The database generator 614 may be a cloud-based database generator. The graphic rendering system is configured to add additional schemas on the fly without changing the core graphic rendering engine 608.

For example, the offline modules 616, 618, 620 might add a fresh type/widget/dialog for a completely new functionality. The fresh type/widget/dialog may be a dynamic type/widget/dialog as opposed to a static type/widget/dialog. With the graphic rendering system, the dynamic type/widget/dialog may be updated from the connected modules 616, 618, 620 based on the currently supported schemes of the rendering engine 608 in map software 606. The graphic rendering engine 608 could also update/add new information to graphical database 610 and/or geographical database 612. No updates will be required as the end applications are provided data in a format that the map software can utilize with the certified tool. This allows new functions and features to be added (apart from static database layers) on the fly without re-certifying software.

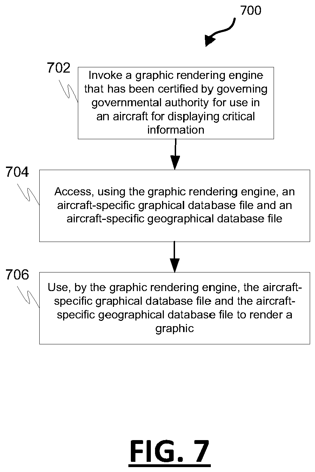

FIG. 7 is a process flow chart depicting an example process 700 for displaying critical avionics information on an aircraft. The example process 700 includes invoking, using avionics computing equipment on the aircraft, a graphic rendering engine that has been certified by governing governmental authority for use in an aircraft for displaying critical information (operation 702). The graphic rendering engine may be embedded inside an ARINC User Application.

The example process 700 includes accessing, using the graphic rendering engine, an aircraft-specific graphical database file and an aircraft-specific geographical database file (operation 704). The aircraft-specific graphical database file contains graphical information including symbol, fill color, text color, line thickness, highlight, outline color and/or shape data that has been customized for use on the aircraft. The aircraft-specific geographical database file contains geographical information including latitude, longitude, bearing, point, line, and/or polygon data that has been customized for use on the aircraft. The aircraft-specific graphical database file and/or the aircraft-specific geographical database file may have been customized for use on the aircraft based on aircraft profile data for the aircraft. The aircraft-specific graphical database file and/or the aircraft-specific geographical database file may be generated by a database generator on board the aircraft. The aircraft-specific graphical database file and/or the aircraft-specific geographical database file may be generated by an offsite (*e.g*., cloud-based) database generator. The aircraft-specific graphical database file and/or the aircraft-specific geographical database file may be generated periodically or on demand by the database generator. The aircraft-specific graphical database file and/or the aircraft-specific geographical database file may be generated using both the aircraft profile data and onsite raw data stored onsite at the site of the cloud-based generator. The aircraft-specific graphical database file and/or the aircraft-specific geographical database file may be stored as a parametric data item (PDI) file on the onboard avionics computing equipment.

The example process 700 includes using, by the graphic rendering engine, the aircraft-specific graphical database file and the aircraft-specific geographical database file to render a graphic (operation 706). The graphic is used for displaying critical information on a cockpit display without prior certification by governing governmental authority of either the aircraft-specific graphical database file or the aircraft-specific geographical database file.

The subject matter described herein discloses apparatus, systems, techniques and articles to decouple certified software from database layer additions or updates which allows an end user to perform the following without changing and re-certifying the software: Add a database graphical layer at any point of time; Change the display characteristics (*e.g*., color, size, symbol, etc.) any time; Customize the look and feel of the display for each aircraft/vehicle; Add separate graphical layers for different aircraft/vehicle/fleet (*e.g.,* Add an Oil Rig display for a few Agusta helicopters owned by Shell - without software change); Allow human factor evaluation to be performed even when the vehicle is in service; and/or Provide multi-lingual support by creating databases with different fonts/languages.

In one embodiment, provided is a graphic rendering system for use with certified avionics software onboard an aircraft to generate and render a graphical display for display on a cockpit display on the aircraft. The graphic rendering system comprises a graphic rendering engine implemented by avionics computing equipment on the aircraft and that has been certified by governing governmental authority for use in an aircraft for displaying critical information, wherein the graphic rendering engine is configured for use with certified avionics display software to render a graphic for display on a cockpit display, and configured to access an aircraft-specific graphical database file and an aircraft-specific geographical database file for graphical and geographical data for use in rendering the graphic for display on the cockpit display. The aircraft-specific graphical database file contains graphical information including symbol, fill color, text color, line thickness, highlight, outline color and/or shape data that has been customized for use on the aircraft. The aircraft-specific geographical database file contains geographical information including latitude, longitude, bearing, point, line, and/or polygon data that has been customized for use on the aircraft. The graphic rendering engine is configured to use the aircraft-specific graphical database file and the aircraft-specific geographical database file for rendering the graphic for displaying critical information on the cockpit display without prior certification by governing governmental authority of either the aircraft-specific graphical database file or the aircraft-specific geographical database file.

These aspects and other embodiments may include one or more of the following features. The aircraft-specific graphical database file may have been customized for use on the aircraft based on aircraft profile data. The aircraft-specific geographical database file may have been customized for use on the aircraft based on aircraft profile data. The graphic rendering system may further comprise a database generator that is configured to retrieve the aircraft profile data that is specific to the aircraft; and generate based on the aircraft profile data the aircraft-specific graphical database file and the aircraft-specific geographical database file for use with the graphic rendering engine and the certified avionics display software in rendering the graphic for display on the cockpit display. The database generator may be configured to generate the aircraft-specific graphical database file and the aircraft-specific geographical database file periodically or on demand. The database generator may be a cloud-based database generator. The database generator may be configured to generate the aircraft-specific graphical database file and the aircraft-specific geographical database file using both the aircraft profile data and onsite raw data stored onsite at the site of the cloud-based generator. The database generator may be configured to retrieve off-site raw data, store the off-site raw data as the onsite raw data, and generate the aircraft-specific graphical database file and the aircraft-specific geographical database file using the retrieved off-site raw data. The database generator may be on-board the aircraft. The graphic rendering system, wherein both the aircraft-specific graphical database file and the aircraft-specific geographical database file are stored as a parametric data item (PDI) file on the onboard avionics computing equipment. The graphic rendering engine may be embedded inside an ARINC User Application. The aircraft profile data may indicate that the aircraft uses an off-aircraft, cloud-based navigational aid, wherein the off-aircraft, cloud-based navigational aid may comprise at least one of a flight management system (FMS), weather reporting service, radar service, and/or communication management function (CMF); and the database generator may be configured to generate the aircraft-specific graphical database file and/or the aircraft-specific geographical database file based on the specific off-aircraft, cloud-based navigational aid used by the aircraft.

In another embodiment, a method of displaying critical avionics information on a specific aircraft is provided. The method comprises: invoking, using avionics computing equipment on the specific aircraft, a graphic rendering engine that has been certified by governing governmental authority for use in an aircraft for displaying critical information; accessing, using the graphic rendering engine, an aircraft-specific graphical database file and an aircraft-specific geographical database file, wherein the aircraft-specific graphical database file contains graphical information including symbol, fill color, text color, line thickness, highlight, outline color and/or shape data that has been customized for use on the specific aircraft, and wherein the aircraft-specific geographical database file contains geographical information including latitude, longitude, bearing, point, line, and/or polygon data that has been customized for use on the specific aircraft; and using, by the graphic rendering engine, the aircraft-specific graphical database file and the aircraft-specific geographical database file to render a graphic for displaying critical information on the cockpit display without prior certification by governing governmental authority of either the aircraft-specific graphical database file or the aircraft-specific geographical database file.

These aspects and other embodiments may include one or more of the following features. The aircraft-specific graphical database file may have been customized for use on the specific aircraft based on aircraft profile data for the specific aircraft. The aircraft-specific geographical database file may have been customized for use on the specific aircraft based on aircraft profile data for the specific aircraft. The method may further comprise: retrieving, by a database generator, the aircraft profile data that is specific to the aircraft; and generating, by the database generator based on the aircraft profile data, the aircraft-specific graphical database file and the aircraft-specific geographical database file for use with the graphic rendering engine in rendering the graphic for display on the cockpit display. The generating the aircraft-specific graphical database file and the aircraft-specific geographical database file may comprise generating the aircraft-specific graphical database file and the aircraft-specific geographical database file periodically or on demand. The database generator may be a cloud-based database generator. The generating the aircraft-specific graphical database file and the aircraft-specific geographical database file may comprise generating the aircraft-specific graphical database file and the aircraft-specific geographical database file using both the aircraft profile data and onsite raw data stored onsite at the site of the cloud-based generator. The generating the aircraft-specific graphical database file and the aircraft-specific geographical database file may comprise: retrieving, by the database generator, off-site raw data; storing the off-site raw data as the onsite raw data; and generating the aircraft-specific graphical database file and the aircraft-specific geographical database file using the retrieved off-site raw data. The database generator may be on-board the aircraft. Both the aircraft-specific graphical database file and the aircraft-specific geographical database file may be stored as a parametric data item (PDI) file on the onboard avionics computing equipment. The graphic rendering engine may be embedded inside an ARINC User Application.

In another embodiment, non-transitory computer readable media encoded with programming instructions that are configurable to cause a processor in avionics computing equipment on an aircraft to perform a method is provided. The method comprises: invoking, using avionics computing equipment on the specific aircraft, a graphic rendering engine that has been certified by governing governmental authority for use in an aircraft for displaying critical information; accessing, using the graphic rendering engine, an aircraft-specific graphical database file and an aircraft-specific geographical database file, wherein the aircraft-specific graphical database file contains graphical information including symbol, fill color, text color, line thickness, highlight, outline color and/or shape data that has been customized for use on the specific aircraft, and wherein the aircraft-specific geographical database file contains geographical information including latitude, longitude, bearing, point, line, and/or polygon data that has been customized for use on the specific aircraft; and using, by the graphic rendering engine, the aircraft-specific graphical database file and the aircraft-specific geographical database file to render a graphic for displaying critical information on the cockpit display without prior certification by governing governmental authority of either the aircraft-specific graphical database file or the aircraft-specific geographical database file.

These aspects and other embodiments may include one or more of the following features. The aircraft-specific graphical database file may have been customized for use on the specific aircraft based on aircraft profile data for the specific aircraft. The aircraft-specific geographical database file may have been customized for use on the specific aircraft based on aircraft profile data for the specific aircraft. The method may further comprise: retrieving, by a database generator, the aircraft profile data that is specific to the aircraft; and generating, by the database generator based on the aircraft profile data, the aircraft-specific graphical database file and the aircraft-specific geographical database file for use with the graphic rendering engine in rendering the graphic for display on the cockpit display. The generating the aircraft-specific graphical database file and the aircraft-specific geographical database file may comprise generating the aircraft-specific graphical database file and the aircraft-specific geographical database file periodically or on demand. The database generator may be a cloud-based database generator. The generating the aircraft-specific graphical database file and the aircraft-specific geographical database file may comprise generating the aircraft-specific graphical database file and the aircraft-specific geographical database file using both the aircraft profile data and onsite raw data stored onsite at the site of the cloud-based generator. The generating the aircraft-specific graphical database file and the aircraft-specific geographical database file may comprise: retrieving, by the database generator, off-site raw data; storing the off-site raw data as the onsite raw data; and generating the aircraft-specific graphical database file and the aircraft-specific geographical database file using the retrieved off-site raw data. The database generator may be on-board the aircraft. Both the aircraft-specific graphical database file and the aircraft-specific geographical database file may be stored as a parametric data item (PDI) file on the onboard avionics computing equipment. The graphic rendering engine may be embedded inside an ARINC User Application.

In another embodiment, disclosed is a certified graphic rendering system for use with certified avionics software onboard an aircraft (e.g., airplane, helicopter, etc.) to generate and render a graphical display to be displayed on a cockpit display on the aircraft. The certified graphic rendering system comprises a graphic rendering engine that has been certified by governing governmental authority for use in an aircraft for displaying critical information, wherein the graphic rendering engine is implemented by avionics computing equipment on the aircraft and configured for use with certified avionics display software to render a graphic for display on a cockpit display, and wherein the graphic rendering engine is further configured to access a graphical database file that is stored as a parametric data item (PDI) file on the onboard avionics computing equipment and a geographical database file that is stored as a PDI file on the onboard avionics computing equipment for data used in rendering the graphic. The graphical database file and the geographical database file are configured to be updated without certification for flight. The graphical database file and geographical database file are configured based upon a predetermined format. The graphical database file contains graphical information including symbol, fill color, text color, line thickness, highlight, and/or outline color or shape. The geographical database file contains geographical information including latitude, longitude, bearing, point, line, and/or polygon data. The certified graphic rendering system further includes a database generator onboard the aircraft that is configured to retrieve aircraft profile data from the aircraft and raw data from a data repository. The database generator is configured to generate from the raw data and the aircraft profile data an updated graphical database file and an updated geographical database file for use with the graphic rendering engine and the certified avionics display software in rendering a graphic for display on a cockpit display without prior certification by governing governmental authority.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention.

## Claims

1. A graphic rendering system for use with certified avionics software onboard an aircraft to generate and render a graphical display for display on a cockpit display on the aircraft, the system comprising:
a graphic rendering engine implemented by avionics computing equipment on the aircraft and that has been certified by governing governmental authority for use in an aircraft for displaying critical information, the graphic rendering engine configured for use with certified avionics display software to render a graphic for display on a cockpit display, and configured to access an aircraft-specific graphical database file and an aircraft-specific geographical database file for graphical and geographical data for use in rendering the graphic for display on the cockpit display;
the aircraft-specific graphical database file containing graphical information including symbol, fill color, text color, line thickness, highlight, outline color and/or shape data that has been customized for use on the aircraft;
the aircraft-specific geographical database file containing geographical information including latitude, longitude, bearing, point, line, and/or polygon data that has been customized for use on the aircraft; and
wherein the graphic rendering engine is configured to use the aircraft-specific graphical database file and the aircraft-specific geographical database file for rendering the graphic for displaying critical information on the cockpit display without prior certification by governing governmental authority of either the aircraft-specific graphical database file or the aircraft-specific geographical database file.

2. The graphic rendering system of claim 1, further comprising:
a database generator that is configured to:
retrieve the aircraft profile data that is specific to the aircraft; and
generate based on the aircraft profile data the aircraft-specific graphical database file and the aircraft-specific geographical database file for use with the graphic rendering engine and the certified avionics display software in rendering the graphic for display on the cockpit display.

3. The graphic rendering system of claim 2, wherein the database generator is a cloud-based database generator.

4. The graphic rendering system of claim 3, wherein the database generator is configured to generate the aircraft-specific graphical database file and the aircraft-specific geographical database file using both the aircraft profile data and onsite raw data stored onsite at the site of the cloud-based generator.

5. The graphic rendering system of claim 4, wherein the database generator is configured to retrieve off-site raw data, store the off-site raw data as the onsite raw data, and generate the aircraft-specific graphical database file and the aircraft-specific geographical database file using the retrieved off-site raw data.

6. The graphic rendering system of claim 2, wherein:
the aircraft profile data indicates that the aircraft uses an off-aircraft, cloud-based navigational aid, the off-aircraft, cloud-based navigational aid comprising at least one of a flight management system (FMS), weather reporting service, radar service, and/or communication management function (CMF); and
the database generator is configured to generate the aircraft-specific graphical database file and the aircraft-specific geographical database file based on the specific off-aircraft, cloud-based navigational aid used by the aircraft.

7. A method of displaying critical avionics information on a specific aircraft, the method comprising:
invoking, using avionics computing equipment on the specific aircraft, a graphic rendering engine that has been certified by governing governmental authority for use in an aircraft for displaying critical information;
accessing, using the graphic rendering engine, an aircraft-specific graphical database file and an aircraft-specific geographical database file, wherein the aircraft-specific graphical database file contains graphical information including symbol, fill color, text color, line thickness, highlight, outline color and/or shape data that has been customized for use on the specific aircraft, and wherein the aircraft-specific geographical database file contains geographical information including latitude, longitude, bearing, point, line, and/or polygon data that has been customized for use on the specific aircraft; and
using, by the graphic rendering engine, the aircraft-specific graphical database file and the aircraft-specific geographical database file to render a graphic for displaying critical information on the cockpit display without prior certification by governing governmental authority of either the aircraft-specific graphical database file or the aircraft-specific geographical database file.

8. The method of claim 7, further comprising:
retrieving, by a database generator, the aircraft profile data that is specific to the aircraft; and
generating, by the database generator based on the aircraft profile data, the aircraft-specific graphical database file and the aircraft-specific geographical database file for use with the graphic rendering engine in rendering the graphic for display on the cockpit display.

9. The method of claim 8, wherein the generating the aircraft-specific graphical database file and the aircraft-specific geographical database file comprises generating the aircraft-specific graphical database file and the aircraft-specific geographical database file using both the aircraft profile data and onsite raw data stored onsite at the site of a cloud-based generator.

10. The method of claim 9, wherein the generating the aircraft-specific graphical database file and the aircraft-specific geographical database file comprises:
retrieving, by the database generator, off-site raw data;
storing the off-site raw data as the onsite raw data; and
generating the aircraft-specific graphical database file and the aircraft-specific geographical database file using the retrieved off-site raw data.
